## Europäisches Patentamt

## European Patent Office

## Office européen des brevets

(11) Veröffentlichungsnummer: **0 448 987 A1**

# (12) EUROPÄISCHE PATENTANMELDUNG

(21) Anmeldenummer: 91103160.7

(22) Anmeldetag: 02.03.91

(51) Int. Cl.5: **B65G 61/00**, B65G 47/91, C03B 35/14

(30) Priorität: 27.03.90 DE 9003530 U

(43) Veröffentlichungstag der Anmeldung:
02.10.91 Patentblatt 91/40

(84) Benannte Vertragsstaaten:
**BE CH DE FR GB IT LI**

(71) Anmelder: FLACHGLAS AKTIENGESELLSCHAFT
Otto-Seeling-Promenade 10-14
W-8510 Fürth(DE)

(72) Erfinder: **Frielingsdorf, Horst, Dipl.-Ing.**
**Am Meisenhort 2**
**W-5630 Remscheid-Lennep(DE)**
Erfinder: **Eckardt, Rudolf, Dipl.-Ing.**
**Aug.-Oppenberg-Steege 3**
**W-4230 Wesel(DE)**

(74) Vertreter: **Andrejewski, Walter et al**
**Patentanwälte Andrejewski, Honke & Partner**
**Postfach 10 02 54 Theaterplatz 3**
**W-4300 Essen 1(DE)**

(54) Vorrichtung für den Transport von Werkstücken, insbesondere von Glasscheiben.

(57) Vorrichtung für den Transport von Werkstücken, insbesondere von Glasscheiben, aus einer Aufnahmeposition in eine Bearbeitungsposition mit einem ortsfesten Vorrichtungsgestell, einem Aufnahmearm mit Einrichtung für die Aufnahme eines Werkstückes und einem Schwenkarm in dem Vorrichtungsgestell.

Der Schwenkarm (4) ist um eine vertikale Schwenkwelle (5) schwenkbar. Der Aufnahmearm (2) ist an den Schwenkarm über eine zur Schwenkwelle parallele Stellwelle (6) angeschlossen. Die Schwenkwelle ist von einer freilauffreien Rastkupplung (11) zumindest bereichsweise umgeben, die entweder einerseits mit einem mit dem Antrieb (8) verbundenen Antriebsrad (12) bei der Transportierung mit enger Toleranz fest verbindbar oder andererseits vorrichtungsgestellfest mit Rastzahneingriff verrastbar ist. Die Stellwelle ist von einer freilauffreien Rastkupplung zumindest bereichsweise umgeben, die entweder einerseits mit dem Stellrad bei der Transportbewegung mit enger Toleranz fest verbindbar oder andererseits mit dem Schwenkarm mit Rastzahneingriff verrastbar ist. Ein positionssteuerbarer Antrieb weist eine Positionstoleranz auf, die kleiner ist als die Teilung des Rastzahneingriffs der Rastkupplungen.

Fig.2

Die Erfindung betrifft eine Vorrichtung für den Transport von Werkstücken, insbesondere von Glasscheiben, aus einer Aufnahmeposition in eine Bearbeitungsposition, mit einem ortsfesten Vorrichtungsgestell, einem Aufnahmearm mit Einrichtung für die Aufnahme eines Werkstückes und einem Schwenkarm in dem Vorrichtungsgestell, wobei der Schwenkarm um eine vertikale Schwenkwelle schwenkbar und der Aufnahmearm an den Schwenkarm über eine zur Schwenkwelle parallele Stellwelle angeschlossen ist und wobei der Schwenkarm sowie der Aufnahmearm über ein Sinusgetriebe mit einem dem Schwenkarm zugeordneten Schwenkrad mit positionssteuerbarem Antrieb in dem Vorrichtungsgestell sowie einem dem Aufnahmearm zugeordneten Stellrad getriebegekoppelt sind und die Einrichtung für die Aufnahme des Werkstückes bei angetriebenem Schwenkarm eine Bewegung längs einer horizontalen Transportbahn ausführt. An die Einrichtung für die Aufnahme des Werkstückes können diese unmittelbar oder unter Zwischenschaltung von Hilfsaggregaten angeschlossen werden. - Der Begriff Bearbeitungsposition umfaßt im Rahmen der Erfindung auch Behandlungspositionen und/oder Abgabepositionen. Es versteht sich, daß bei einem Sinusgetriebe das Schwenkrad sowie das Stellrad über eine Transmission verbunden sind.

Bei der bekannten Vorrichtung, von der die Erfindung ausgeht (DE-AS 10 61 487), sind der Schwenkarm und der Aufnahmearm fest an die Schwenkwelle bzw. an die Stellwelle angeschlossen. Das bedeutet, daß die Position, welche die Einrichtung für die unmittelbare oder mittelbare Aufnahme eines Werkstückes an den vorgegebenen Enden des Transportweges einnimmt, nur so genau ist, wie es der positionsgesteuerte Antrieb vorgibt. Ein solcher Antrieb besitzt jedoch unvermeidbar eine beachtliche und häufig störende Positionstoleranz. Die Positionstoleranz beträgt z. B., bezogen auf die Schwenkwelle und damit den Schwenkarm, drei Winkelgrade. - Bei der bekannten Vorrichtung ist ein zusätzlicher Stellfreiheitsgrad für den Schwenkarm und den damit verbundenen Aufnahmearm verwirklicht, und zwar zum Ein- und Auskuppeln eines Wagens, der an die Einrichtung für die unmittelbare oder mittelbare Aufnahme eines Werkstückes angeschlossen ist. Zur Reduzierung der Positionstoleranzen trägt dieses nicht bei.

Der Erfindung liegt die Aufgabe zugrunde, eine Vorrichtung des eingangs beschriebenen Aufbaus so weiter auszubilden, daß die Positionstoleranz, die der Antrieb mitbringt, in bezug auf die Endpositionen der Einrichtung für die Aufnahme eines Werkstückes wesentlich reduziert werden kann.

Zur Lösung dieser Aufgabe lehrt die Erfindung, daß die Schwenkwelle von einer freilauffreien Rastkupplung zumindest bereichsweise umgeben ist, die entweder einerseits mit einem mit dem Antrieb verbundenen Antriebsrad bei der Transportbewegung mit enger Toleranz fest verbindbar oder andererseits vorrichtungsgestellfest mit Rastzahneingriff verrastbar ist, daß die Stellwelle von einer freilauffreien Rastkupplung zumindest bereichsweise umgeben ist, die entweder einerseits mit dem Stellrad bei der Transportbewegung mit enger Toleranz fest verbindbar oder andererseits mit dem Schwenkarm mit Rastzahneingriff verrastbar ist, und daß der positionssteuerbare Antrieb eine Positionstoleranz aufweist, die kleiner ist als die Teilung des Rastzahneingriffs der Rastkupplungen. Daraus resultiert die Wirkung, daß die Positionstoleranz sich beim Verrasten der Rastkupplung an der Schwenkwelle mit dem Vorrichtungsgestell bzw. beim Verrasten der Rastkupplung an der Stellwelle mit dem Schwenkarm auf die rastkupplungsinhärente Toleranz reduziert. Es versteht sich, daß die Rastkupplungen als toleranzarme Präzisionsbauteile ausgeführt sind. Diese Reduzierung kann damit ohne Schwierigkeiten so weit geführt werden, daß für die Einrichtung für die Aufnahme eines Werkstückes an den Enden des Transportweges eine Genauigkeit im Bereich von Hundertstelmillimetern vorgegeben werden kann. Eine solche Reduzierung ist insbesondere dann möglich, wenn nach bevorzugter Ausführungsform der Erfindung die Anordnung so getroffen wird, daß die Rastkupplung an der Schwenkwelle zum Antriebsrad hin Kupplungszapfen aufweist, die in Kupplungszapfenaufnahmen des Antriebsrades einfassen, und daß diese Rastkupplung zum Vorrichtungsgestell hin mit Planzahnringen und Rastzahneingriff ausgerüstet ist. Es empfiehlt sich entsprechend an der Stellwelle so vorzugehen, daß die Rastkupplung an der Stellwelle zum Stellrad hin Kupplungszapfen aufweist, die in Kupplungszapfenaufnahmen des Stellrades einfassen und daß diese Rastkupplung zum Schwenkarm hin mit Planzahnringen und Rastzahneingriff ausgerüstet ist. Die Rastkupplungen können auf einfache Weise über hydraulische oder pneumatische Zylinderkolbenanordnungen betätigbar sein. Durch Funktionssicherheit und bauliche Einfachheit ausgezeichnet ist eine Ausführungsform, bei der bei Betätigung der Zylinderkolbenanordnung, die die Schwenkwelle umgibt, der Schwenkarm mit dem Aufnahmearm und dem Sinusgetriebe heboder senkbar sind.

Es versteht sich, daß die Möglichkeit besteht, an die Einrichtung für die unmittelbare oder mittelbare Aufnahme eines Werkstückes weitere verstellbare Manipulierbauteile für das Werkstück anzuschließen, z. B. um das Werkstück um eine Achse positionierend zu drehen, die mit der Achse des Aufnahmearms übereinstimmt. Dann kann in diesem Bereich die erfindungsgemäße Maßnahme, die zu einer beachtlichen Reduzierung der Positionstoleranz führt, die der Antrieb mitbringt, erneut wie beschrieben verwirklicht werden, - undsoweiterfort an weiteren, entsprechend ausgebildeten Gelenkstellen.

Im folgenden wird die Erfindung anhand einer lediglich ein Ausführungsbeispiel darstellenden Zeichnung ausführlicher erläutert. Es zeigen

Fig. 1    in schematischer Darstellung die Ansicht einer erfindungsgemäßen Vorrichtung,

Fig. 2    in weiterer Schematisierung und in größerem Maßstab einen Ausschnitt aus der Fig. 1,

Fig. 3    in gegenüber der Fig. 1 wesentlich vergrößertem Maßstab den Ausschnitt A aus dem Gegenstand nach Fig. 1,

Fig. 4    im Maßstab der Figur 3 den Ausschnitt B aus dem Gegenstand der Figur 1.

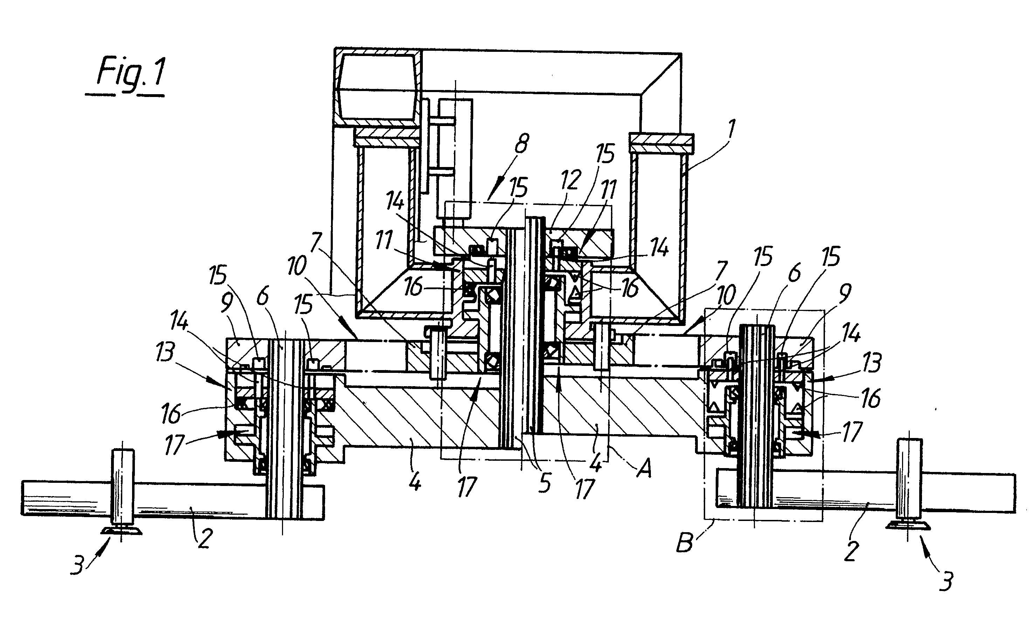

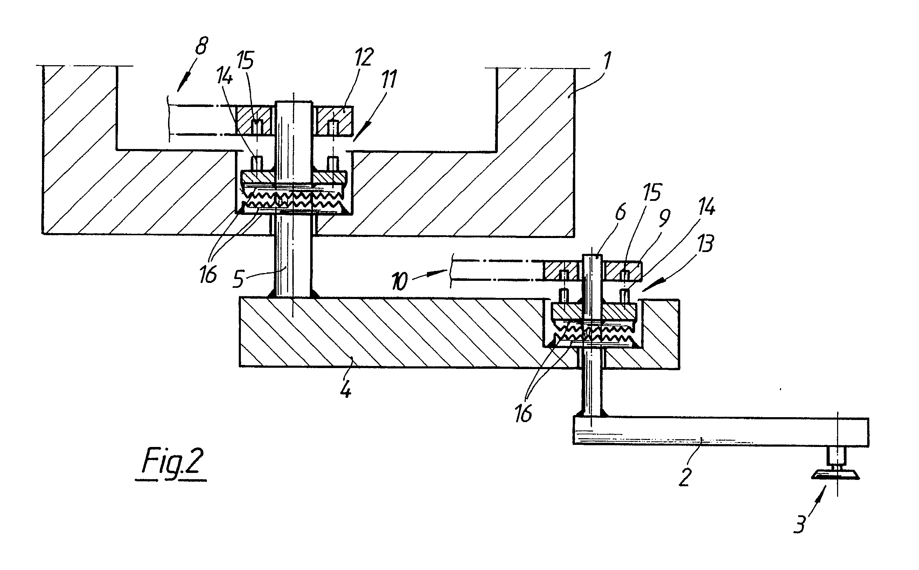

Die in den Figuren dargestellte Vorrichtung ist für den Transport von Werkstücken, insbesondere von Glasscheiben bestimmt. Diese Werkstücke werden aus einer Aufnahmeposition in eine Bearbeitungsposition transportiert, die auch eine Behandlungsposition oder Abgabeposition sein kann. In der Figur 1 ist die erfindungsgemäße Vorrichtung zweimal gezeichnet, und zwar rechts in der Aufnahmeposition und transportbereit, links in der Endposition und toleranzreduziert. Zum grundsätzlichen Aufbau gehören ein ortsfestes Vorrichtungsgestell 1, ein Aufnahmearm 2 mit Einrichtung 3 für die unmittelbare oder mittelbare Aufnahme eines Werkstückes, die im Ausführungsbeispiel als Saugheber ausgeführt ist, und ein Schwenkarm 4. Der Aufnahmearm 2 und der Schwenkarm 4 sind in dem Vorrichtungsgestell 1 gelagert. Der Schwenkarm 4 ist um eine vertikale Schwenkwelle 5 schwenkbar. Der Aufnahmearm 2 ist an den Schwenkarm 4 über eine Stellwelle 6 angeschlossen, die parallel zur Schwenkwelle 5 verläuft. Die Anordnung ist so getroffen, daß der Schwenkarm 4 sowie der Aufnahmearm 2 über ein Sinusgetriebe mit einem dem Schwenkarm 4 zugeordneten Schwenkrad 7 mit positionssteuerbarem Antrieb 8 in dem Vorrichtungsgestell 1 sowie einem dem Aufnahmearm 2 zugeordneten Stellrad 9 getriebegekoppelt sind. Es versteht sich, daß zwischen dem Schwenkrad 7 und dem Stellrad 9 eine Transmission 10 angeordnet ist. Die Einrichtung 3 für die Aufnahme des Werkstückes ist bei angetriebenem Schwenkarm 4 über die Kinematik des Sinusgetriebes 7, 8, 9, 10 längs einer horizontalen Transportbahn geführt, die in den Figuren 1 und 2 in der Zeichenebene verläuft und die gezeichneten Endpositionen verbindet.

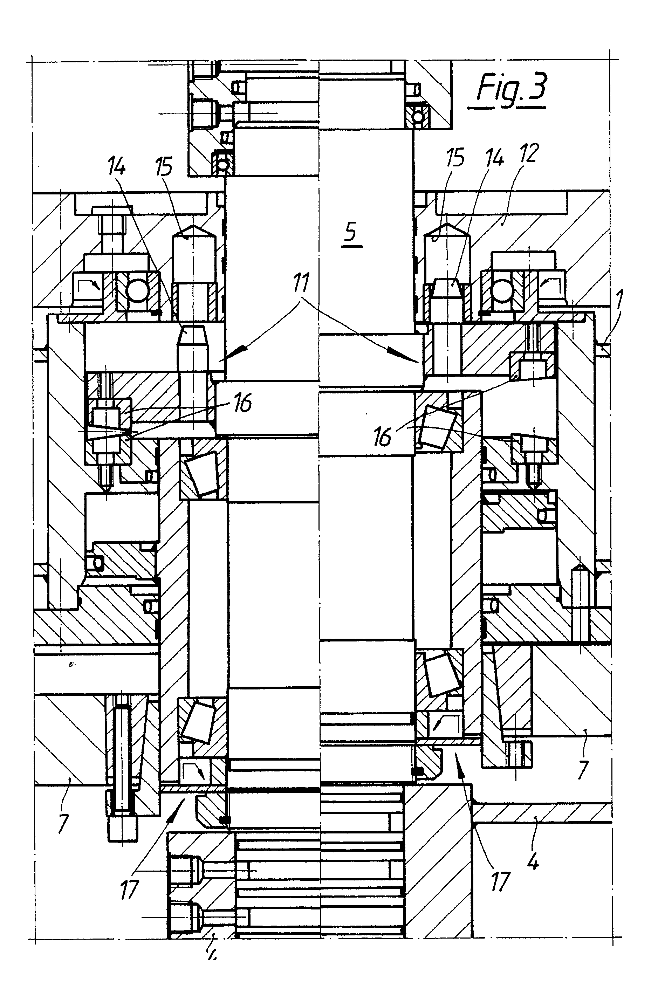

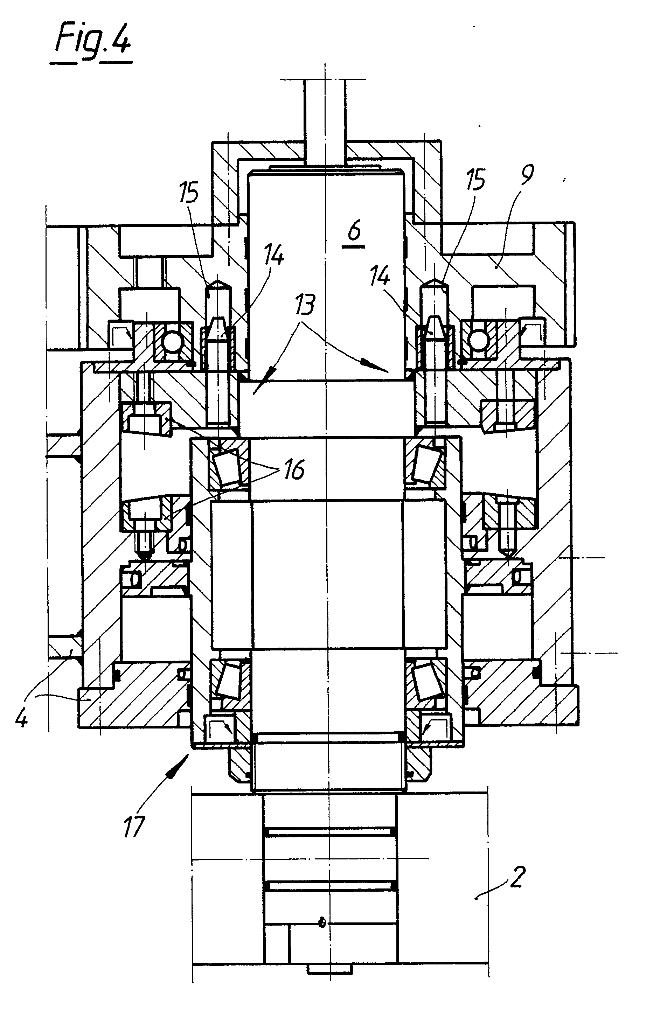

Aus einer vergleichenden Betrachtung der Figuren 1 bis 3 entnimmt man, daß die Schwenkwelle 5 von einer freilaufenden Rastkupplung 11 umgeben ist, die entweder einerseits mit einem mit dem Antrieb 8 verbundenen Antriebsrad 12 fest verbindbar ist, und zwar bei der Transportbewegung, oder andererseits vorrichtungsgestellfest verrastbar ist. Aus einer vergleichenden Betrachtung der Figuren 1, 2 und 4 entnimmt man weiterhin, daß die Stellwelle 6 von einer freilauffreien Rastkupplung 13 umgeben ist, die entweder einerseits mit dem Stellrad 9 fest verbindbar ist, und zwar bei der Transportbewegung, oder andererseits mit dem Schwenkarm 4 verrastbar ist.

In bezug auf die Teilung der Rastkupplungen 11, 13 ist unter Berücksichtigung der Positionstoleranz, die der positionssteuerbare Antrieb 8 mitbringt, eine besondere Abstimmung verwirklicht. Der positionssteuerbare Antrieb 8 weist eine Positionstoleranz auf, die kleiner ist als die Teilung der Rastkupplungen 11, 13. Dadurch und durch eine ausreichend genaue Fertigung der Rastkupplungen 11, 13 wird erreicht, daß die Positionstoleranz sich beim Verrasten der Rastkupplung 11 an der Schwenkwelle 5 mit dem Vorrichtungsgestell 1 bzw. beim Verrasten der Rastkupplung 13 an der Stellwelle 6 mit dem Schwenkarm 4 sich auf die rastkupplungsinhärente Toleranz reduziert. Im Ausführungsbeispiel ist die Anordnung so getroffen, daß bei der Transportbewegung die Rastkupplung 11 an der Schwenkwelle 5 zum Antriebsrad 12 hin Kupplungszapfen 14 aufweist, die in Kupplungszapfenaufnahmen 15 des Antriebsrades 12 einfassen. Andererseits ist zum Erreichen der toleranzreduzierten Endposition die Anordnung an dieser Rastkupplung 11 zum Vorrichtungsgestell 1 hin mit Planzahnringen 16 ausgerüstet. Man erkennt in der Figur weiterhin, daß bei der Transportbewegung die Rastkupplung 13 an der Stellwelle 6 zum Stellrad 9 hin Kupplungszapfen 14 aufweist, die in Kupplungszapfenaufnahmen 15 des Stellrades 9 einfassen. Hier ist zum Erreichen der toleranzreduzierten Endposition die Rastkupplung 13 zum Schwenkarm 4 hin mit Planzahnringen 16 ausgerüstet.

Die Rastkupplungen sind über hydraulische oder pneumatische Zylinderkolbenanordnungen 17 betätigbar, die die zugeordneten Wellen umgeben. Wird die Zylinderkolbenanordnung 17 betätigt, die die Schwenkwelle 5 umgibt, so bewegt sich das Aggregat aus Schwenkarm 4 und Aufnahmearm 2 mit dem Sinusgetriebe 7, 8, 9, 10 auf oder nieder. Wird die Zylinderkolbenanordnung 17 betätigt, die die Stellwelle 6 umgibt, so bewegt sich der Aufnahmearm 2 auf oder nieder.

## Patentansprüche

1.  Vorrichtung für den Transport von Werkstücken, insbesondere von Glasscheiben, aus einer Aufnahmeposition in eine Bearbeitungsposition, - mit

einem ortsfesten Vorrichtungsgestell, einem Aufnahmearm mit Einrichtung für die Aufnahme eines Werkstückes und einem Schwenkarm in dem Vorrichtungsgestell,

wobei der Schwenkarm um eine vertikale Schwenkwelle schwenkbar und der Aufnahmearm an den Schwenkarm über eine zur Schwenkwelle parallele Stellwelle angeschlossen ist und wobei der Schwenkarm sowie der Aufnahmearm über ein Sinusgetriebe mit einem dem Schwenkarm zugeordneten Schwenkrad mit positionssteuerbarem Antrieb in dem Vorrichtungsgestell sowie einem dem Aufnahmearm zugeordneten Stellrad getriebegekoppelt sind und die Einrichtung für die Aufnahme des Werkstückes bei angetriebenem Schwenkarm eine Bewegung längs einer horizontalen Transportbahn ausführt, **dadurch gekennzeichnet**, daß die Schwenkwelle (5) von einer freilauffreien Rastkupplung (11) zumindest bereichweise umgeben ist, die entweder einerseits mit einem mit dem Antrieb (8) verbundenen Antriebsrad (12) bei der Transportbewegung mit enger Toleranz fest verbindbar oder andererseits vorrichtungsgestelfest mit Rastzahneingriff verrastbar ist,

daß die Stellwelle (6) von einer freilauffreien Rastkupplung (13) zumindest bereichsweise umgeben ist, die entweder einerseits mit dem Stellrad (9) bei der Transportbewegung mit enger Toleranz fest verbindbar oder andererseits mit dem Schwenkarm (4) mit Rastzahneingriff verrastbar ist, und

daß der positionssteuerbare Antrieb (8) eine Positionstoleranz aufweist, die kleiner ist als die Teilung des Rastzahneingriffs der Rastkupplungen (11, 13).

2. Vorrichtung nach Anspruch 1, dadurch gekennzeichnet, daß die Rastkupplung (11) an der Schwenkwelle (5) zum Antriebsrad (12) hin Kupplungszapfen (14) aufweist, die in Kupplungszapfenaufnahmen (15) des Antriebsrades (12) einfassen, und daß diese Rastkupplung (11) zum Vorrichtungsgestell (1) hin mit Planzahnringen (16) und Rastzahneingriff ausgerüstet ist.

3. Vorrichtung nach einem der Ansprüche 1 oder 2, dadurch gekennzeichnet, daß die Rastkupplung (13) an der Stellwelle (6) zum Stellrad (9) hin Kupplungszapfen (14) aufweist, die in Kupplungszapfenaufnahmen (15) des Stellrades (9) einfassen und daß diese Rastkupplung (13) zum Schwenkarm (4) hin mit Planzahnringen (16) und Rastzahneingriff ausgerüstet ist.

4. Vorrichtung nach einem der Ansprüche 1 bis 3, dadurch gekennzeichnet, daß die Rastkupplungen (11, 13) über hydraulische oder pneumatische Zylinderkolbenanordnungen (17) betätigbar sind, die die zugeordneten Wellen (5 bzw. 6) umgeben.

5. Vorrichtung nach einem der Ansprüche 1 bis 4, dadurch gekennzeichnet, daß bei Betätigung der Zylinderkolbenanordnung (17), die die Schwenkwelle (5) umgibt, der Schwenkarm (4) mit dem angeschlossenen Aufnahmearm (2) heb- oder senkbar ist.

_Fig.1_

EP 0 448 987 A1

Fig.2

EP 0 448 987 A1

Fig.3

Fig.4

| | **EINSCHLÄGIGE DOKUMENTE** | | EP 91103160.7 |

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>DE - B - 1 214 150</u><br>(COMPAGNIE DE SAINT-GOBAIN)<br>   \* Ansprüche 1-3,6; Fig. 1-4;<br>     Spalte 5, Zeile 27 -<br>     Spalte 6, Zeile 5 \*<br>        -- | 1-5 | B 65 G 61/00<br>B 65 G 47/91<br>C 03 B 35/14 |
| D,A | <u>DE - B - 1 061 487</u><br>(COMPAGNIE DE SAINT-GOBAIN)<br>   \* Ansprüche; Fig. 1,2 \*<br>        -- | 1 | |
| A | <u>DE - B2 - 2 544 138</u><br>(SAINT-GOBAIN INDUSTRIES)<br>   \* Fig. 1 (Baugruppe D),3;<br>     Spalte 9, Zeilen 6-38 \*<br>        ---- | 1 | |

|  | RECHERCHIERTE SACHGEBIETE (Int Cl⁵) |
|---|---|
| | B 65 G<br>C 03 B<br>C 03 C |

Der vorliegende Recherchenbericht wurde für alle Patentansprüche erstellt.

| Recherchenort | Abschlußdatum der Recherche | Prüfer |
|---|---|---|
| WIEN | 25-06-1991 | HAUSWIRTH |

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsatze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03.82